# FASCICULE DE BREVET EUROPEEN

(11) **EP 4 053 727 B1**
(45) Date de publication et mention de la délivrance du brevet: **11.06.2025**
(21) Numéro de dépôt: 22158428.7
(22) Date de dépôt: 24.02.2022
(51) Int. Cl.: G06F 21/71, G06F 7/58

(54) **GÉNÉRATEUR DE NOMBRES ALÉATOIRES**
ZUFALLSZAHLENGENERATOR
RANDOM NUMBER GENERATOR

(30) Priorité: 05.03.2021 FR 2102165
(43) Date de publication de la demande: 07.09.2022
(73) Titulaire: STMicroelectronics (Rousset) SAS, 13790 Rousset (FR)
(72) Inventeur: MARTINEZ, Albert, 13320 BOUC BEL AIR (FR); HADDAD, Patrick, 13124 PEYPIN (FR)
(74) Mandataire: Cabinet Beaumont

(56) Documents cités:
- GANTEL LAURENT ET AL: "A FPGA-Based Post-Processing and Validation Platform for Random Number Generators", 2020 IEEE INTERNATIONAL PARALLEL AND DISTRIBUTED PROCESSING SYMPOSIUM WORKSHOPS (IPDPSW), IEEE, 18 May 2020 (2020-05-18), pages 123 - 126, XP033799378, DOI: 10.1109/IPDPSW50202.2020.00027
- FABIO PARESCHI ET AL: "On Statistical Tests for Randomness Included in the NIST SP800-22 Test Suite and Based on the Binomial Distribution", IEEE TRANSACTIONS ON INFORMATION FORENSICS AND SECURITY, IEEE, USA, vol. 7, no. 2, 1 April 2012 (2012-04-01), pages 491 - 505, XP011433693, ISSN: 1556-6013, DOI: 10.1109/TIFS.2012.2185227

## Description

### Domaine technique

La présente description concerne de façon générale la génération de nombres aléatoires, et, plus particulièrement, les générateurs de nombres aléatoires. Les générateurs de nombres aléatoires comprennent, généralement, des circuits de test vérifiant le fonctionnement du générateur de nombres aléatoires. La présente description se rapporte à un circuit de test d'un générateur de nombres aléatoires.

### Technique antérieure

Les générateurs de nombres aléatoires (TRNG, True Random Number Generator) sont des dispositifs adaptés à produire des suites de nombres pour lesquels il n'existe aucun lien déterministe entre un nombre et son ou ses prédécesseurs.

Les générateurs de nombres aléatoires sont utilisés dans toutes sortes de domaines, mais notamment dans le domaine de la sécurité informatique. Des nombres aléatoires sont typiquement utilisés dans le chiffrement de données pour la génération de clés de chiffrement et/ou de déchiffrement.

La génération d'un nombre aléatoire peut être effectuée en se basant, par exemple, sur des phénomènes physiques, sur des traitements de signaux analogiques, et/ou sur des traitements de signaux numériques.

Un générateur de nombres aléatoires est caractérisé par son entropie. Un générateur de nombres aléatoires peut comprendre un ou plusieurs circuits de test permettant de détecter et/ou d'évaluer l'évolution, ou la variation, le plus souvent une chute, de son entropie. GANTEL LAURENT ET AL: "A FPGA-Based Post-Processing and Validation Platform for Random Number Generators", 2020 IEEE INTERNATIONAL PARALLEL AND DISTRIBUTED PROCESSING SYMPOSIUM WORKSHOPS (IPDPSW), IEEE, 18 mai 2020 (2020-05-18), pages 123-126, DOI: 10.1109/IPDPSW50202.2020.00027, fait partie de l'art antérieur.

Il serait souhaitable de pouvoir améliorer, au moins en partie, certains aspects des générateurs de nombres aléatoires et de leurs circuits de test.

### Résumé de l'invention

Il existe un besoin pour des générateurs de nombres aléatoires plus performants.

Il existe un besoin pour des générateurs de nombres aléatoires ayant une entropie plus grande.

Il existe un besoin pour des circuits de test de générateurs de nombres aléatoires plus performants.

Un mode de réalisation pallie tout ou partie des inconvénients des générateurs de nombres aléatoires connus.

Un mode de réalisation pallie tout ou partie des inconvénients des circuits de test connus de générateurs de nombres aléatoires.

Un mode de réalisation prévoit un circuit de test d'un générateur de nombres aléatoires adapté à fournir une série de bits aléatoires et comprenant au moins une unité de test configurée pour détecter un défaut dans la série de bits aléatoires, ledit circuit de test étant adapté à vérifier si, après la détection d'un premier défaut par l'unité de test, le nombre de bits aléatoires, générés par le générateur de nombres aléatoires sans détection d'un deuxième défaut par l'unité de test, est inférieur à un premier seuil.

Selon un mode de réalisation, le premier seuil est égal à l'inverse de la probabilité d'apparition dudit défaut.

Selon un mode de réalisation, le défaut est une série de N bits successifs tous de même valeur.

Selon un mode de réalisation, le défaut est une série de N bits successifs tous égaux à "1".

Selon un mode de réalisation, le défaut est une série de N bits successifs tous égaux à "0".

Selon un mode de réalisation, N est égal à 34.

Selon un mode de réalisation, le défaut est une série de M bits successifs dont la somme est supérieure à un deuxième seuil.

Selon un mode de réalisation, M est égal à 1024 et le deuxième seuil est égal à 628.

Selon un mode de réalisation, le générateur de nombres aléatoires comprend au moins deux unités de test disposées en parallèle.

Selon un mode de réalisation, lesdites au moins deux unités de test recherchent des défauts différents.

Un autre mode de réalisation prévoit un générateur de nombres aléatoires comprenant un circuit de test décrit précédemment.

Selon un mode de réalisation, le générateur de nombres aléatoires comprend, en outre, une source adaptée à générer la série de bits aléatoires.

Selon un mode de réalisation, la source comprend une source de bruit et une étage de numérisation.

Selon un mode de réalisation, le générateur de nombres aléatoires comprend, en outre, une unité de traitement adaptée à appliquer un traitement mathématique à la série de bits aléatoires.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, schématiquement et sous forme de blocs, un mode de réalisation d'un générateur de nombres aléatoires ;
la figure 2 représente, schématiquement et sous forme de blocs, un mode de réalisation d'un circuit de test du générateur de nombres aléatoires de la figure 1 ; et
la figure 3 représente un graphique illustrant les performances du générateur de nombres aléatoires de la figure 1, ce graphique représentant la probabilité d'apparition d'un défaut en fonction de l'entropie du générateur de nombres aléatoires.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les sources de bits aléatoires numériques, c'est-à-dire les sources produisant des bits aléatoires numériques, ne sont pas décrites ci-après. Les modes de réalisation décrits étant compatibles avec les sources de bits aléatoires numériques usuelles.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

Dans la suite de la description, il est fait référence à des valeurs binaires, des bits, présentant deux valeurs possibles, un "1" (un) ou un "0" (zéro). En pratique un bit peut être représenté par une tension oscillant entre deux niveaux, un niveau haut représentant un "1" (un) et un niveau bas représentant un "0" (zéro).

De plus, dans la description, lorsque l'on fait référence à l'entropie de bits aléatoires, il s'agit de l'entropie de Shannon.

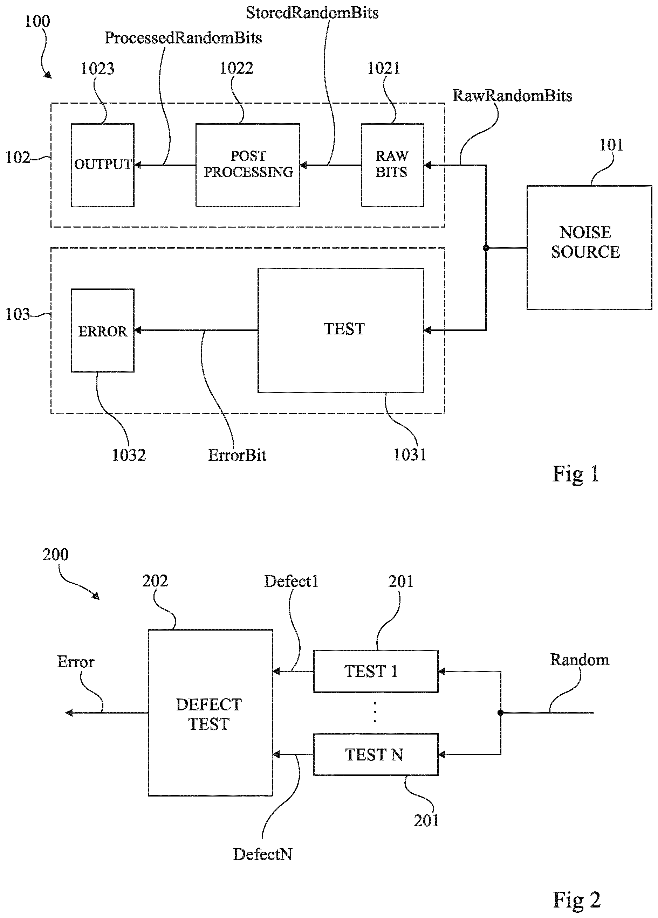

La figure 1 représente, schématiquement et sous forme de blocs, un mode de réalisation d'un générateur de nombres aléatoires 100.

Comme dit précédemment, un générateur de nombres aléatoires (TRNG, True Random Number Generator) est un dispositif adapté à fournir des suites de nombres, par exemple de bits, pour lesquels il n'existe aucun lien déterministe entre un nombre et son ou ses prédécesseurs. Un générateur de ce type est généralement utilisé au sein même d'un système électronique plus complet.

Le générateur de nombres aléatoires 100 comprend une source 101 (NOISE SOURCE) de bits aléatoires. La source 101 comprend une source de bruit, numérique ou analogique, et un étage de numérisation du bruit de la source de bruit (non représenté en figure 1). La source 101 fournit une série de bits aléatoires RawRandomBits. Selon un exemple, la source 101 peut comprendre un ou plusieurs oscillateurs en anneaux (Ring Oscillator), et/ou une ou plusieurs boucles à verrouillage de phase (Phase Lock Loop, PLL).

Le générateur de nombres aléatoires 100 comprend, en outre, une branche de traitement 102 de la série de bits aléatoires RawRandomBits, et une branche de test 103 de la source 101.

La branche de traitement 102 permet de rendre accessible la série de bits aléatoires RawRandomBits, et, de façon optionnelle, de lui appliquer un traitement mathématique. Selon un exemple, la branche 102 comprend :
- un registre d'entrée 1021 (RAW BITS) ;
- une unité de traitement 1022 (POST PROCESSING) ; et
- un registre de sortie 1023 (OUTPUT).

Une fois générés par la source 101, les bits de la série de bits aléatoires RawRandomBits sont stockés dans le registre 1021 d'entrée avant leur traitement. Le registre 1021 fournit des bits StoredRandomBits à l'unité de traitement 1022.

L'unité de traitement 1022 applique un traitement mathématique aux bits StoredRandomBits stockés par le registre d'entrée 1021. L'unité de traitement 1022 fournit, en sortie, des bits traités ProcessedRandomBits au registre de sortie 1023. L'unité de traitement permet d'augmenter le caractère aléatoire, et donc la fiabilité, de la série de bits aléatoires fournie par la source 101. Autrement dit, l'unité de traitement a pour vocation de cumuler l'entropie par bit des bits StoredRandomBits, pour que chaque bit des bits StoredRandomBits ait une entropie de 1. Selon un exemple, l'unité de traitement 1022 met en oeuvre des algorithmes de chiffrement, tel que l'AES (Advanced Encryption Standard), des fonctions de hachage, ou tout autres fonctions adaptées à augmenter l'entropie d'une série de bits aléatoires. Par ailleurs, l'unité de traitement 1022 est optionnelle. En effet, si on considère que la source 101 est suffisamment performante, l'unité de traitement n'est pas nécessaire, mais, en pratique, c'est très rarement le cas.

Le registre de sortie 1023 stocke les bits traités ProcessedRandomBits, et les rend accessibles pour un dispositif électronique, par exemple un processeur, ayant besoin de bits aléatoires.

La branche de test 103 comprend un mode de réalisation d'un système de test 1031 (TEST), et un registre d'erreur 1032 (ERROR). La branche de test 103 vérifie tout au long du fonctionnement de la source 101 si elle fournit une série de bits "suffisamment aléatoires". Plus particulièrement, la branche de test 103 examine la série de bits aléatoires RawRandomBits fournie par la source 101, et détermine s'il existe un lien déterministe entre un bit et son ou ses prédécesseurs en utilisant différents tests. Pour cela, des défauts peuvent être recherchés dans la série de bits aléatoires.

Par ailleurs, les générateurs de nombres aléatoires peuvent être soumis à différentes méthodes permettant d'attester de leur fiabilité, c'est-à-dire de la suffisance du caractère aléatoire des nombres, par exemple des bits, aléatoires qu'ils fournissent. Ces méthodes sont par exemple la méthode SP800-90B, ou la méthode AIS31. Ces méthodes imposent aux générateurs de nombres aléatoires d'effectuer des tests sur les bits aléatoires et d'appliquer un traitement à ces bits, comme le traitement mathématique effectuée par l'unité de traitement 1022.

Le système de test 1031 reçoit, en entrée, la série de bits aléatoires RawRandomBits et l'examine. Le système de test 1031 est décrit plus en détails en relation avec la figure 2. Le système de test 1031 fournit, en sortie, un bit d'erreur ErrorBit.

Le registre d'erreur 1032 stocke le bit d'erreur ErrorBit, et le rend accessible pour un dispositif électronique ayant besoin de vérifier la fiabilité de la source 101, et donc la fiabilité du générateur de nombres aléatoires 100. Selon un exemple, le registre d'erreur 1032 peut rendre le bit d'erreur ErrorBit accessible en accordant sa lecture, ou bien en générant une interruption à chaque fois que la valeur du bit d'erreur indique qu'une erreur est détectée.

La figure 2 représente, schématiquement et sous forme de blocs, un mode de réalisation d'un système de test 200 du type du système de test 1031 décrit en relation avec la figure 1.

Le système de test 200 est adapté à recevoir une série de bits aléatoires Random, du type de la série de bits aléatoires RawRandomBits décrit en relation avec la figure 1, et à fournir un bit d'erreur Error, du type du bit d'erreur ErrorBit décrit en relation avec la figure 1. La série de bits aléatoires Random est générée par une source (non représentée en figure 2) du type de la source 101 décrite en relation avec la figure 1.

Le système de test 200 est composé de deux parties distinctes. Une première partie du système de test 200 est adapté à vérifier la série de bits aléatoires Random fournie par la source, et plus particulièrement, à chercher différents défauts dans cette série de bits Random. Une deuxième partie du système 200 est adaptée à effectuer l'analyse de ces défauts, et, plus particulièrement, à déterminer si les défauts détectés sont de véritables défauts ou si ce sont des "faux positifs".

La première partie du système de test 200 comprend une ou plusieurs, de préférence plusieurs, unités de test 201 (TEST1, ..., TEST N). Chaque unité de test 201 reçoit, en entrée, la série de bits aléatoires Random, et fournit, en sortie, un bit de défaut Defect1, ..., DefectN. Chaque unité de test 201 est adaptée à rechercher un ou plusieurs défauts dans la série de bits aléatoires Random. Si une unité de test 201 détecte un défaut, son bit de défaut Defect1, ..., DefectN peut être mis à "1" (un), ou respectivement mis à "0" (zéro). Différents types de défauts peuvent être considérés. Ci-après, au moins deux exemples sont détaillés. La personne du métier comprend que d'autres tests peuvent être mis en oeuvre, comme, par exemple, des tests spécifiques au type de la source générant la série de bits aléatoires Random.

Selon un exemple, une suite de N bits tous égaux à "1" (un), ou respectivement à "0" (zéro), dans la série de bits aléatoires Random est considérée comme étant un défaut de la série de bits aléatoires. Selon un exemple, N peut être égal à 34. Ce test est appelé le test de répétition (Repetition test en anglais). Ainsi, une unité de test 201 peut vérifier si la série de bits aléatoires Random comprend une suite de N éléments, par exemple 34 éléments, tous égaux à "1" (un), ou respectivement à "0" (zéro). Selon un exemple, une unité 201 peut vérifier la présence d'une suite de N bits égaux à "1" (un), et une autre unité de test 201 peut vérifier la présence d'une suite de N bits égaux à "0" (zéro).

Selon un autre exemple, il peut être considéré comme un défaut que la somme de M bits consécutifs soit supérieure à un seuil SUM. Selon un exemple, un défaut peut être que la somme de 1024 bits consécutifs est supérieure à 628. Ce test est appelé le test "monobit" (Monobit test en anglais) . Ainsi, une unité de test 201 peut calculer la somme des bits consécutifs de la série de bits, et vérifier si cette somme est supérieure ou non au seuil SUM.

La deuxième partie du système de test 200 comprend un circuit de test 202 (DEFECT TEST). Le circuit de test 202 reçoit, en entrée, les bits de défaut Defect1, ..., DefectN des unités de test 201, et fournit, en sortie, le bit d'erreur Error. Le circuit de test 202 est adapté à vérifier la fréquence d'apparition de défauts détectés par les unités de test 201. Plus particulièrement, chaque défaut a une probabilité d'apparition, aussi faible soit elle, le circuit de test 202 est adapté à vérifier que la fréquence d'apparition d'un défaut n'est pas supérieure à sa probabilité d'apparition. Selon un exemple, si un défaut a une probabilité d'apparition de 1 % et que pendant la génération de cent bits ce défaut apparaît cinq fois, alors la source de bits aléatoire présentent un dysfonctionnement.

Par ailleurs, le circuit de test 202 est adapté à vérifier si les défauts détectés par les unités de test 201 sont des défauts véritables ou des "faux-positifs". En effet, un défaut peut être un "faux positif", c'est-à-dire un défaut présent dans la série de bits aléatoires mais ne représentant pas un dysfonctionnement de la source générant ces bits. Il est normal d'avoir des défauts "faux-positif". Si un défaut correspond, par exemple, à une suite précise de bits, comme celle recherchée par un test du type test de répétition, il est toujours possible que cette suite précise ait été générée aléatoirement. Plus généralement, un défaut a une probabilité d'apparition non nulle, cela signifie que lorsque un nombre assez grand de bits est généré, ce défaut a le risque d'apparaître sans pour autant représenter un défaut de la source 201. Ce nombre assez grand correspond en particulier à l'inverse de la probabilité d'apparition du défaut. Pour illustration, si un défaut a une probabilité d'apparition de 1 %, il y a une chance sur cent pour que ce défaut apparaisse pendant la génération de cent bits aléatoires.

Selon un mode de réalisation, le circuit de test 202 est adapté à dénombrer, après la détection d'un défaut par une unité de test 201, le nombre de bits aléatoires générés sans détection d'un autre défaut par une unité de test 201. Si ce nombre de bits aléatoires est supérieur à un seuil TH alors le circuit de test 202 considère que la source 201 fonctionne correctement. Le bit d'erreur est alors mis à une valeur ne symbolisant pas une erreur, par exemple un "0" (zéro). Sinon, le circuit de test 202 considère que la source présente un dysfonctionnement. Le bit d'erreur est alors mis à une valeur symbolisant une erreur, par exemple un "1" (un).

Le seuil TH est défini comme étant l'inverse de la probabilité P du défaut recherché par l'unité de test 201.

Comme cela est représenté en figure 2, le circuit de test 202 est adapté à recevoir des bits de défaut de la part de plusieurs unités de test 201. Le circuit de test 202 est alors adapté à traiter chaque bits de défaut Defect1, ..., DefectN séparément.

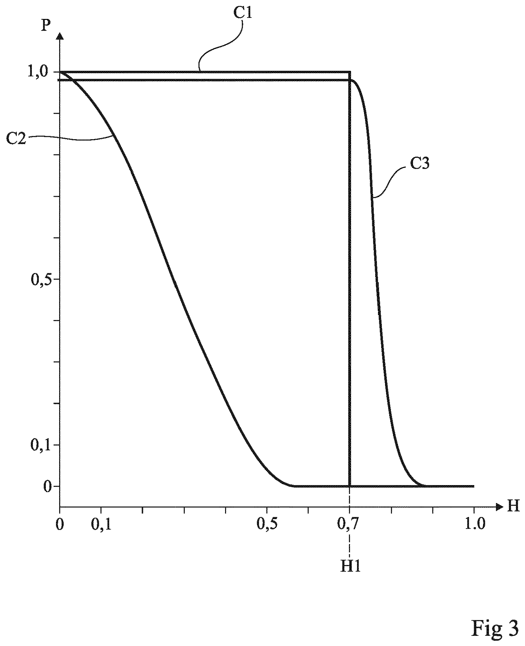

La figure 3 représente un graphique comparant les performances de deux types de générateur de nombres aléatoires à une performance d'un générateur idéal de nombres aléatoires.

Le graphique de la figure 3 comprend trois courbes représentant l'évolution de la probabilité P que la branche de test d'un générateur de nombres aléatoires détecte un défaut sur une série de bits aléatoires, en fonction de son entropie de Shannon H. L'entropie H d'une série de bits aléatoires permet de quantifier le "désordre" de la série de bits, autrement dit du caractère aléatoire de la série de bits. Plus l'entropie est grande, plus la série de bits est "aléatoire", et donc plus la série de bits est satisfaisante pour le générateur de nombres aléatoires.

Une courbe C1 illustre le cas idéal d'un générateur de nombres aléatoires du type du générateur 100 décrit en relation avec la figure 1. La courbe C1 est de type échelon décroissant. Pour une entropie H comprise entre 0 et une entropie H1, la probabilité P est de 1, et pour une entropie supérieure à H1, la probabilité P est de 0. Cette courbe symbolise le fait que pour une source fournissant des bits aléatoires ayant une entropie supérieure à l'entropie H1, l'apparition de défaut est impossible.

La valeur de l'entropie H1 est définie empiriquement, par exemple, en fonction du type de la source de bits aléatoires utilisée dans le générateur de nombres aléatoires, de l'utilisation du générateur de nombres aléatoires, etc.

Une courbe C2 illustre le cas d'un générateur de nombres aléatoires du type du générateur 100 décrit en relation avec la figure 1 mais ne comprenant pas de circuit de test du type du circuit 202 décrit en relation avec la figure 2. Le générateur de la courbe C2 indique détecter une erreur à chaque fois qu'un défaut est détecté par les unités de test 201. La courbe C2 montre que, sans circuit de test 202, la probabilité P de détection d'un défaut décroit fortement en fonction de l'entropie. Autrement dit, plus l'entropie est grande, plus il est difficile de détecter un défaut.

Une courbe C3 illustre le cas d'un générateur de nombres aléatoires du type du générateur 100 de nombres aléatoires décrit en relation avec la figure 1, et comprenant donc un circuit de test du type du circuit 202 décrit en relation avec la figure 2. La courbe C3 se rapproche plus de la courbe C1. La courbe C3 montre, notamment, que l'ajout du circuit de test 202 permet à la probabilité de détection P de ne décroitre qu'à partir de la valeur d'entropie H1 supérieure à 0, par exemple de l'ordre de 0,7.

Un avantage de l'utilisation d'un circuit de test 202 est qu'il permet de détecter une variation de l'entropie en se basant sur l'apparition de défauts parmi les bits aléatoires générés.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus.

## Revendications

1. Circuit de test (202) d'un générateur de nombres aléatoires (100) adapté à fournir une série de bits aléatoires (RawRandomBits ; Random) et comprenant au moins une unité de test (201) configurée pour détecter un défaut dans la série de bits aléatoires (RawRandomBits ; Random), ledit circuit de test (202) étant adapté à vérifier si, après la détection d'un premier défaut par l'unité de test (201), le nombre de bits aléatoires, générés par le générateur de nombres aléatoires (100) sans détection d'un deuxième défaut par l'unité de test (201), est inférieur à un premier seuil (TH) et dans ce cas, considérer que la source présente un dysfonctionnement.

2. Circuit selon la revendication 1, dans lequel le premier seuil (TH) est égal à l'inverse de la probabilité (P) d'apparition dudit défaut.

3. Circuit selon la revendication 1 ou 2, dans lequel le défaut est une série de N bits successifs tous de même valeur.

4. Circuit selon l'une quelconque des revendications 1 à 3, dans lequel le défaut est une série de N bits successifs tous égaux à "1" (un).

5. Circuit selon l'une quelconque des revendications 1 à 3, dans lequel le défaut est une série de N bits successifs tous égaux à "0" (zéro).

6. Circuit selon l'une quelconque des revendications 3 à 5, dans lequel N est égal à 34.

7. Circuit selon la revendication 1 ou 2, dans lequel le défaut est une série de M bits successifs dont la somme est supérieure à un deuxième seuil (SUM).

8. Circuit selon la revendication 7, dans lequel M est égal à 1024 et le deuxième seuil (SUM) est égal à 628.

9. Circuit selon l'une quelconque des revendications 1 à 8, dans lequel le générateur de nombres aléatoires (100) comprend au moins deux unités de test (201) disposées en parallèle.

10. Circuit selon la revendication 9, dans lequel lesdites au moins deux unités de test (201) recherchent des défauts différents.

11. Générateur de nombres aléatoires (100) comprenant un circuit de test selon l'une quelconque des revendications 1 à 10.

12. Générateur selon la revendication 11, comprenant, en outre, une source (101) adaptée à générer la série de bits aléatoires (RawRandomBits ; Random).

13. Générateur selon la revendication 11 ou 12, dans lequel la source (101) comprend une source de bruit et une étage de numérisation.

14. Générateur selon l'une quelconque des revendications 11 à 13, comprenant, en outre, une unité de traitement (1022) adaptée à appliquer un traitement mathématique à la série de bits aléatoires (RawRandomBits ; Random).

## Patentansprüche

1. Schaltung (202) zum Testen eines Zufallszahlengenerators (100), der ausgelegt ist zum Liefern einer Folge von Zufallsbits (RawRandomBits; Random), und die mindestens eine Testeinheit (201) aufweist, die konfiguriert ist zum Detektieren eines Fehler in der Folge von Zufallsbits (RawRandomBits; Random), wobei die Testschaltung (202) dazu ausgelegt ist, zu überprüfen, ob nach dem Erkennen eines ersten Fehlers durch die Testeinheit (201) die Anzahl der vom Zufallszahlengenerator (100) erzeugten Zufallsbits ohne Erkennung eines zweiten Fehlers durch die Testeinheit (201) kleiner als ein erster Schwellenwert (TH) ist, und in diesem Fall davon auszugehen ist, dass die Quelle eine Fehlfunktion aufweist.

2. Schaltung nach Anspruch 1, wobei der erste Schwellenwert (TH) gleich dem Kehrwert der Wahrscheinlichkeit (P) des Auftretens des Fehlers ist.

3. Schaltung nach Anspruch 1 oder 2, wobei der Defekt eine Reihe von N aufeinanderfolgenden Bits mit dem gleichen Wert ist.

4. Schaltung nach einem der Ansprüche 1 bis 3, wobei der Defekt eine Reihe von N aufeinanderfolgenden Bits ist, die alle gleich "1" (eins) sind.

5. Schaltung nach einem der Ansprüche 1 bis 3, wobei der Defekt eine Reihe von N aufeinanderfolgenden Bits ist, die alle gleich "0" (null) sind.

6. Schaltung nach einem der Ansprüche 3 bis 5, wobei N gleich 34 ist.

7. Schaltung nach Anspruch 1 oder 2, wobei der Defekt eine Reihe von M aufeinanderfolgenden Bits ist, deren Summe größer als ein zweiter Schwellenwert (SUM) ist.

8. Schaltung nach Anspruch 7, wobei M gleich 1024 ist und der zweite Schwellenwert (SUM) gleich 628 ist.

9. Schaltung nach einem der Ansprüche 1 bis 8, wobei der Zufallszahlengenerator (100) mindestens zwei parallel angeordnete Testeinheiten (201) aufweist.

10. Schaltung nach Anspruch 9, wobei die mindestens zwei Testeinheiten (201) nach unterschiedlichen Fehlern suchen.

11. Zufallszahlengenerator (100) mit einer Testschaltung nach einem der Ansprüche 1 bis 10.

12. Generator nach Anspruch 11, der ferner eine Quelle (101) aufweist, die in der Lage ist, die Folge von Zufallsbits (RawRandomBits; Random) zu erzeugen.

13. Generator nach Anspruch 11 oder 12, wobei die Quelle (101) eine Rauschquelle und eine Digitalisierungsstufe aufweist.

14. Generator gemäß einem der Ansprüche 11 bis 13, der ferner eine Verarbeitungseinheit (1022) aufweist, die dazu ausgelegt ist, eine mathematische Verarbeitung auf die Reihe von Zufallsbits (RawRandomBits; Random) anzulegen.

## Claims

1. Circuit (202) for testing a random number generator (100) adapted to delivering a series of random bits (RawRandomBits; Random) and comprising at least one test unit (201) configured to detect a defect in the series of random bits (RawRandomBits; Random), said test circuit (202) being adapted to verifying whether, after the detection of a first defect by the test unit (201), the number of random bits, generated by the random number generator (100) without the detection of a second defect by said unit test (201), is smaller than a first threshold (TH), and, in this case, it should be considerate that the source presents a failure.

2. Circuit according to claim 1, wherein the first threshold (TH) is equal to the inverse of the probability (P) of occurrence of said defect.

3. Circuit according to claim 1 or 2, wherein the defect is a series of N successive bits all of same value.

4. Circuit according to any of claims 1 to 3, wherein the defect is a series of N successive bits, all equal to "1" (one).

5. Circuit according to any of claims 1 to 3, wherein the defect is a series of N successive bits all equal to "0" (zero).

6. Circuit according to any of claims 3 to 5, wherein N is equal to 34.

7. Circuit according to claim 1 or 2, wherein the defect is a series of M successive bits having a sum greater than a second threshold (SUM).

8. Circuit according to claim 7, wherein M is equal to 1,024 and the second threshold (SUM) is equal to 628.

9. Circuit according to any of claims 1 to 8, wherein the random number generator (100) comprises at least two test units (201) arranged in parallel.

10. Circuit according to claim 9, wherein said at least two test units (201) look for different defects.

11. Random number generator (100) comprising a test circuit according to any of claims 1 to 10.

12. Generator according to claim 11, further comprising a source (101) capable of generating the series of random bits (RawRandomBits; Random).

13. Generator according to claim 11 or 12, wherein the source (101) comprises a noise source and a digitizing stage.

14. Generator according to any of claims 11 to 13, further comprising a processing unit (1022) adapted to applying a mathematical processing to the series of random bits (RawRandomBits; Random).
